(19) Europäisches Patentamt
European Patent Office
Office européen des brevets

(11) Veröffentlichungsnummer: **0 307 507 A2**

(12) **EUROPÄISCHE PATENTANMELDUNG**

(21) Anmeldenummer: 87113792.3

(22) Anmeldetag: 21.09.87

(51) Int. Cl.4: **B01L 3/00 , B29D 31/00**

(30) Priorität: 14.09.87 EP 87113423

(43) Veröffentlichungstag der Anmeldung: 22.03.89 Patentblatt 89/12

(84) Benannte Vertragsstaaten: AT BE CH DE ES FR GB GR IT LI LU NL SE

(71) Anmelder: Firma Vitri GmbH & Co. Kunststoffverarbeitung + Formenbau KG
Postfach 1128
D-6109 Mühltal 1(DE)

(72) Erfinder: Glindemann, Dietmar, Dr.sc.nat.
Block 943/15
Halle-Neustadt, DDR - 4200(DD)
Erfinder: Wohlfarth, Christian, Dr.sc.nat.
Ölgrube 5
Merseburg, DDR - 4200(DD)

(74) Vertreter: Zinngrebe, Horst, Dr.rer.nat.
Saalbaustrasse 11
D-6100 Darmstadt(DE)

(54) **Dichtring sowie Verfahren und Vorrichtung zu seiner Herstellung, vorzugsweise für Kegelverbindung.**

(57) Zwischen Kern und Hülse eines Behälters einfügbarer Dichtring zur Abdichtung des Behälterinnenraums gegen inneren oder äußeren Überdruck, wobei Kern und Hülse eine glatte oder geschlossene, jeweils kegelförmige Oberfläche aufweisen und der Kern in die Hülse unter Bildung eines Dichtspaltes einsetzbar ist. Um hierfür einen Preßdichtverschluß zu schaffen, der eine schnelle ökonomische und wirksame Abdichtung gegen inneren und äußeren Überdruck in Gegenwart von Temperatur und unter Medieneinfluß ohne Vorbehandlung des Verschlußteile sicherstellt und bei mechanischem Verschleiß ein problemloses, einfaches Auswechseln garantiert, ist vorgesehen, daß der Dichtring ein der Oberfläche des Kerns angepaßter Folienzylinderring aus einem Thermoplast, Elastomer oder Metall ist, wobei das Verhältnis von Mantelbreite zu Mantelstärke größer als 1 ist, mit einer Mantelbreite zwischen 0,2 und 2 mm für Thermoplaste, bis 6 mm für Elastomere und bis 0,5 mm für Metalle bei einer Mantelstärke von 0,01 bis 1 mm. Ferner wird beschrieben ein Verfahren zur Herstellung eines derartigen Dichtringes, gemäß dem eine ungesinterte Polytetrafluorethylenfolie mit Gleitmittel isotrop auf 0,1 mm Stärke kalandriert wird, das Gleitmittel durch Behandlung mit Lösungsmittel und/oder Anwendung von Vakuum und/oder erhöhter Temperatur entfernt wird, planare Ringe von einer Breite kleiner als 1 mm vor oder nach einer thermischen Oberflächenbehandlung der Folie, die darin besteht, daß die Folie über den Schmelzpunkt erhitzt und sehr schnell abgeschreckt wird, aus der Folie ausgestanzt und zu zylindrischen Ringen verformt werden. Eine Vorrichtung zur Herstellung eines derartigen Dichtrings sieht vor, daß auf eine plastische Unterlage eine plattenförmige Schablone mit ringförmigen Öffnungen aufgebracht ist und daß über der Unterlage ein Stanzgerät mit einer Kammer (3) zwischen zwei konzentrischen Ringschneiden (2) angeordnet ist, wobei sich der Außendurchmesser der Innenschneide (2) von der Schneidenfront her erweitert und der Abstand (4) der Schneidenfronten 0,2 mm bis 5 mm beträgt.

EP 0 307 507 A2

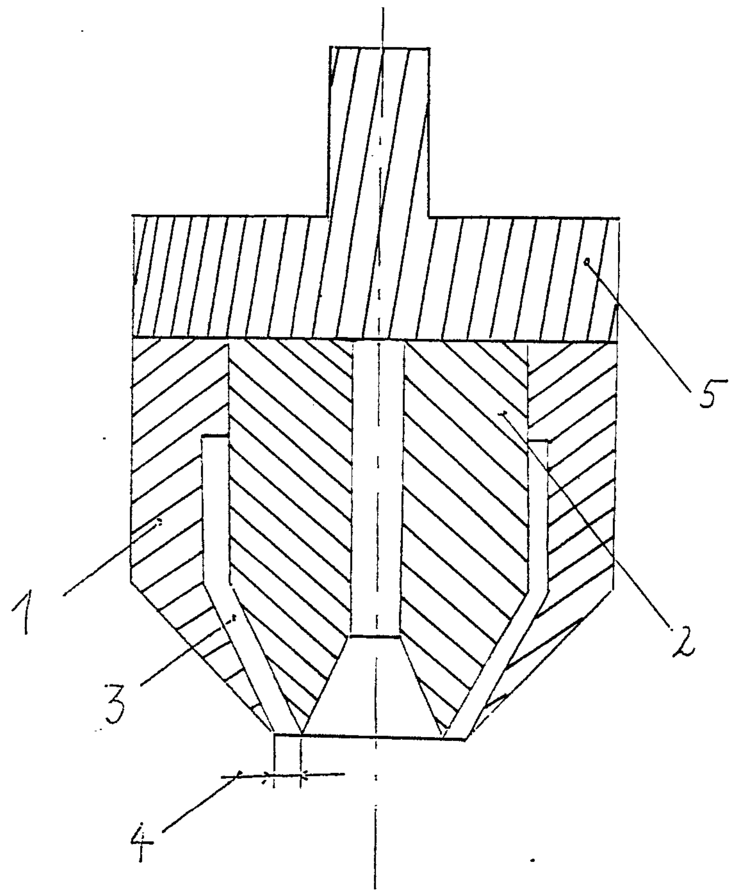
5
1
2
3
4

Die Erfindung betrifft einen Preßdichtverschluß für Gefäße und Behälter aus unterschiedlichen Materialien, vorzugsweise aus Glas, mit einem kegelförmigen Kern, der axial in einer kegelförmigen Hülse beweglich und durch Keilwirkung fixierbar ist, mit jeweils glatten oder geschliffenen Oberflächen, anwendbar in Labors und in der industriellen Praxis der Medizintechnik, Biotechnik, chemischen und Verfahrenstechnik zum vakuum- und druckdichten Verschließen derartiger Behältnisse bei gleichzeitiger Medium und Temperatureinwirkung. Bekannt ist, daß zur Erhöhung der Dichtwirkung bei Auftreten von Vakuum bzw. Überdruck zur Abdichtung von Kegelverbindungen, bestehend aus Kegelkern und Kegelhülse, Manschetten aus gesintertem Polytetrafluorethen eingesetzt werden, die als dünne Folie den gesamten Kegelmantel bedecken und die bei Einpressen des Kegelkerns in die Kegelhülse den Dichtspalt zwischen beiden ausfüllen (Kunststoffhandbuch, Bd. 11, Carl-Hauser-Verlag München 1971; Frank, W.: Undichtheitsquellen an Vakuumapparaturen aus Glas, GIT, 9 (1065) 475 - 482). Nachteilig ist, daß derartige Manschetten zwar das Festfressen der Schliffflächen verhindern, jedoch nur eine geringe Dichtwirkung aufweisen.

Bekannt ist weiterhin, daß zur Abdichtung von kegelförmigen Preßverschlüssen auf dem Kegelkern ein oder mehrere massive Dichtringe aus gesinterem PTFE unterschiedlicher geometrischer Form und Breiten größer als 2 mm in der Regel in Nuten fixiert werden, teilweise werden diese PFTE-Ringe in einer benachbarten Nut mit einem Gummiring stabilisiert (Liedel, K.-H.: Glas in der Chemie, Krausskopfverlag Main, 1973).

Obwohl hierbei gute Abdichtungsergebnisse bei glatten Oberflächen erreicht werden, ist das Einbringen von Nuten in die Kegelkerne derartiger Verbindungen zur Fixierung der Ringe unökonomisch und kostenprogressiv, zum anderen ist die Dichtwirkung gegenüber inneren bzw. äußeren Überdruck bei rauhen, geschliffenen Oberflächen der kegelförmigen Paßstücke und bei mechanischer, sowie Medium- und Temperaturbeanspruchung begrenzt.

Der Erfindung liegt die technische Aufgabe zugrunde, einen Preßdichtverschluß für kegelförmige Verbindungen von Gefäßen und Behältern unterschiedlichster Art zu schaffen, der insbesondere für glatten und geschliffene Glaskegelverbindungen eine schnelle, ökonomische und wirksame Abdichtung gegen inneren und äußeren Überdruck in Gegenwart von Temperatur und unter Medieneinflß ohne Vorbehandlung der Verschlußteile sicherstellt und bei mechanischem Verschleiß ein problemloses einfaches Auswechseln garantiert.

Diese Aufgabe wird erfindungsgemäß dadurch gelöst, daß der Dichtring ein der Oberfläche des Kerns angepaßter Folienzylinderring aus einem Thermoplast, Elastomer oder Metall ist, wobei das Verhältnis von Mantelbreite zu Mantelstärke größer als Eins ist mit einer Mantelbreite zwischen 0,2 und 2 mm für Thermoplaste, bis 6 mm für Elastomere und bis 0,5 mm für Metalle bei einer Mantelstärke von 0,01 bis 1 mm. Diese Folienzylinderringe werden sowohl in der Nennweite dem Kegelkern angepaßt, vorzugsweise jedoch im umfangsbezogenen gleichmäßig gereckten bzw. elastisch gedehnten Zustand auf diesem fixiert. Überraschenderweise wurde gefunden, daß eine derartige Reckung den Abdichtmechanismus des Preßdichtverschlusses äußerst günstig hinsichtlich der Verringerung der Leckraten beeinflußt, zum anderen ist es vorteilhaft, mit den eingesetzten konischen Folienzylinderringen einer Nennweite einen weiten Nennweitenbereich der Kegelform- und Kraftschlußverbindung zu überstreichen und zudem problemlos einen Festsitz auf dem Kegelkern der Verbindung zu erreichen.

Als konische Folienzylinderringe werden bevorzugt Ringe aus elastomeren Polymerisaten von fluorhaltigen Monomeren, wie z.B. vernetzte Copolymerisate von Tetrafluoriden und Perfluormethylvinylether oder auch thermplastische Polymerisate von fluorhaltigen Monomeren, z.B. gesintertes Polytetrafluorethen oder Polytrifluorchlorethen-Copolymerisat oder Ethen-Trifluorchlorethen-Copolymerisat oder Ethen- Tetrafluorethen-Copolymerisat oder Perfluoralkoxypolymer der Strukturformel

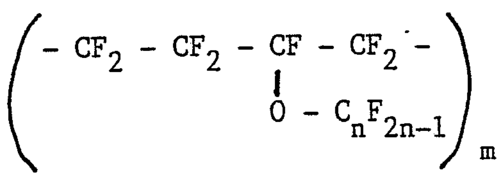

mit n = 2 bis n = 10,
oder aus Mischungen dieser Thermoplaste mit gegebenenfalls bis zu 25 Vol.-% reiner oder gemischter anorganischer Füllstoffe, wie Glas, Graphit oder Molybdänsulfid unterhalb ihres Schmelzpunktes bzw. Schmelzintervalles, auf dem kegelförmigen Kernstück fixiert.

Alternativ werden als konische Folienzylinderringe bevorzugt auch Ringe aus elastomeren Polymerisaten von fluorhaltigen Monomeren, wie z.B. vernetzte Copolymerisate von Tetrafluoriden und Perfluormethylvinylether oder auch thermplastische Polymerisate von fluorhaltigen Monomeren, z.B. gesintertes Polytetrafluorethen oder Polytrifluorchlorethen-Copolymerisat oder Ethen-Trifluorchlorethen-Copolymerisat oder Ethen-Tetrafluorethen-Copolymerisat oder Perfluoralkoxypolymer der Strukturformel

$$-(CF_2-CF_2)_m-\left(\begin{array}{l}CF-CF_2\\ \;| \\ O-C_nF_{2n+1}\end{array}\right)_k-$$

mit n = 2 bis n = 10 und m:k von etwa 10:1 bis etwa 40:1, vorzugsweise etwa 19:1,
oder aus Mischungen dieser Thermoplaste mit gegebenenfalls bis zu 25 Vol.-% reiner oder gemischter anorganischer Füllstoffe, wie Glas, Graphit oder Molybdänsulfid unterhalb ihres Schmelzpunktes bzw. Schmelzintervalles, auf dem kegelförmigen Kernstück fixiert.

Insbesondere wurde festgestellt, daß erfindungsgemäß an das kegelförmige Kernstück angepaßte konische Folienzylinderringe aus gesintertem PTFE, das in modifizierter Form eingesetzt wird, z.B. kurzzeitig über den Kristallitschmelpunkt auf max. 670 K erhitzt und unter diesen abgeschreckt und/oder mittels Gamma- oder Elektronenstrahlung bei Anwesenheit von Luft und 270 bis 370 K bis zum Absinken der Rißdehnung auf 20 bis 50% ihres Wertes vor der Betrahlung bestrahlt und/oder nach Quellung mit 0,1 bis 1 Ma.-% Perfluoralkane und/oder Perfluoralkene und/oder Perfluoralkane im Molassenbereich von 700 bis 2000 g/mol, eine hohe Dichtwirkung bei gleichzeitiger hoher Medien,- Temperatur- und mechanischen Verträglichkeit garantierten bei geringen aufzubringenden Kräften für den axialen Verschluß und die Öffnung der kegelförmigen Verbindung. Überraschenderweise wurde weiterhin gefunden, daß bei gegebener Medien, Temperatur- und mechanischen Beständigkeit die Dichtwirkung gegen inneren und äußeren Überdruck drastisch durch geometrisch extrem kleine und dünne konische Folienzylinderringe erhöht wird, wobei erfindungsgemäß für Ringmaterialien aus gesintertem PTFE vorzugsweise Folienzylinderringe mit Mantelbreiten von 0,2 bis 0,5 mm und/oder 0,5 bis 1 mm und/oder 1 bis 2 mm und Mantelstärken von 0,03 bis 0,1 mm und/oder 0,1 bis 0,3 mm auf dem Kegelkernstück der Verbindung angepaßt sind.

Zur Herstellung des Dichtringes wird erfindungsgemäß ungesinterte Polytetrafluorethylen-Folie mit Gleitmittel isotrop auf 0,1 mm kalandriert. Das Gleitmittel wird durch Behandlung mit Lösungsmittel. vorzugsweise Trichlorethan, und/oder Anwendung von Vakuum und/oder erhöhter Temperatur, vorzugsweise zwischen 400 und 500 K, entfernt. Die Ringe werden erforderlichenfalls nachkalandriert.

Planare Ringe von einer Breite kleiner 1 mm werden vor oder nach einer thermischen Oberflächenbehandlung ausgestanzt. Die thermische Oberflächenbehandlung besteht darin, daß die PTFE-Folie bzw. die Folienringe über den Schmelzpunkt erhitzt und sehr schnell abgeschreckt werden. Diese Oberflächenbehandlung findet vorzugsweise in einem isolierten senkrecht stehenden Rohr statt, wo die Verbrennungsgase einer Wasserstoffflamme aufsteigen und die Folienringe die heiße Gaszone frei schwebend von oben nach unten durchqueren. Als Kühlmittel zum Abschrecken wird vorzugsweise flüssiger Stickstoff verwendet. In einem letzten Verfahrensschritt werden die Ringe zu zylindrischen Miroformringen verformt, etwa in Anlehnung an DE-C-2 536 358.

Die erfindungsgemäßen Dichtringe haben die Geometrie einfacher zylindrischer Manschetten. Die Manschettenbreite der Manschetten beträgt nur wenige Zehntelmillimeter z.B. zwischen 0,4 und 1 mm. Die Mantelstärken der Manschetten beträgt nur wenige Zehntelmillimeter z.B. zwischen 0,05 und 0,3 mm. Die Toleranzen der Maße betragen nur wenige Mikrometer z.B. 10 Mikrometer bezüglich Konstanz der Mantelbreite. Der eingesetzte Rohstoff besitzt Dichtstoffeigenschaften (Plastizität, chemische Beständigkeit, thermische Beständikeit, mechanische Beständigkeit) und steht in genügender Menge kostengünstig zur Verfügung. Die Dichtringe haften ohne Vorbehandlung der abzudichtenen Kegelverbindung (etwa Anbringen von Nuten) selbständig am Kern der Kegelverbindung. Die Dichtringe erlauben die Abdichtung aller Kegelverbindungen, unabhängig von ihrem Kaliber.

Eine Vorrichtung zur Herstellung der erfindungsgemäßen Dichtringe zeichnet sich nach der Erfindung dadurch aus, daß auf einer geeigneten plastischen Unterlage eine oder mehrere Lagen der zu stanzenden Folie des Dichtstoffes fixiert, darauf gegebenenfalls eine plattenförmige Schablone mit ringförmigen Öffnungen zur genauen Plazierung der Stanzstellen fixiert, darüber ein Stanzgerät mit zwei konzentrischen Ringscheiben plaziert sind und daß eine Kammer zwischen den Schneiden existiert, die die ausgestanzten Folienringe aufnimmt und nach ihrem durch den Druck nachfolgend ausgestanzter Folienringe bewirkten Hineintransport bis zur Entleerung der ge füllten Kammer sammelt. Die flachen Folienringe werden während des Hineintransports mit Hilfe des sich von der Schneidenfront her erweiternden Außendurchmessers der Innenschneide bis zu einem gewünschten Maß gereckt und dabei in eine kegelzylindrische Form gebracht.

Bei der Vorrichtung ist der Abstand der Schneidenfronten beider Schneiden 0,2 mm bis 5 mm, vorzugsweise 0,4 mm bis 1 mm, und die Dicke der Folien 0,05 mm bis 0,3 mm, vorzugsweise 0,1 mm bis 0,2 mm, wobei das Verhältnis von Abstand und Dicke mindestens 1,5 beträgt. Gegebenenfalls kann der Außendurchmesser der Innenschneide der Vorrichtung von der Schneidenfront der Innenschneide

her konstant sein.

Der erfindungsgemäße Preßdichtverschluß soll nachstehend an einem Ausführungsbeispiel näher erläutert werden. Der Einsatz erfolgt zur Abdichtung eines Erlenmeyerkolbens NS 29 mit kegelförmigen Verschlußteilen gegen äußeren Überdruck.

Verwendet wird ein Folienring aus PTFE mit einer Mantelbreite von 0,5 mm und einer Folienstärke von 0,05 mm planarer Form in der Abmessung NS 14,5. Der Ring wird zunächst in Gegenwart von Luft bis zu einer Gewichtsabnahme von 1 Ma.-% über den Kristallitschmelzpunkt erhitzt und unter diesen abgeschreckt. Anschließend wird der modifizierte planare Ring mittels geeigneter Vorrichtung oder manuell gleichmäßig elastisch gedehnt und damit in eine zylindrische Form gebracht. Nach der manuellen Plazierung des gedehnten Folienringes auf den nicht vorbehandelten Kegelkern der Glaskegelverbindung etwa in der Schliffmitte kann der Kegelkern axial in die Kegelhülse eingeführt werden und mit leichter Krafteinwirkung verkeilt werden. Die Dichtheit dieses Preßdichtverschlusses ist optisch wegen der hohen Transparenz des Dichtstoffes sofort indizierbar. Das Lösen des Preßdichtverschlusses erfolgt in umgekehrter Weise, wobei der Folienzylinderring infolge der Verspannung auf dem Kegelkern verbleibt und in gleicher Weise wiederverwendet wird.

Zur Herstellung des Folienringes wird eine PTFE-Extrusionspackung stückweise (diskontinuierlich) senkrecht zur Faserstruktur kalandriert, wobei eine Folie von 0,1 mm Stärke entsteht, die bezüglich der Dehnbarkeit isotrop ist. Die Folie wird eine Woche unter Trichlorethan aufbewahrt und danach 5 Stunden unter Vakuum auf 473 K erhitzt, um das Gleitmittel restlos zu entfernen.

Aus dieser PTFE-Folie wird ein Dichtring mit 12,5 mm Innendurchmesser und 14,2 mm Außendurchmesser ausgestanzt. Die thermische Oberflächenbehandlung erfolgt, indem der Ring einen heißen in einem isolierten Rohr aufsteigenden Gasstrom von oben nach unten durchquert und direkt in flüssigen Stickstoff fällt. Der Dichtring wird danach auf einen Metallstab mit 13,8 mm Durchmesser gestreift und zwei Stunden auf 510 K erhitzt, wobei ein konischer Zylinderring entsteht. Ein Glaskolben mit Normschliff NS 14,5 (poliert) wird mit einem Milliliter Dekan gefüllt und mit dem Dichtring versiegelt. Die darauffolgende achtstündige Erhitzung auf 443 K hat keinen meßbaren Masseverlust zur Folge und bestätigt damit die Dichtheit des nach dem erfindungsgemäßen Verfahren hergestellten Dichtrings. Der Dichtring wies auch nach weiteren 100 Abdichtungsversuchen keine Verschleißerscheinungen auf.

Die Vorrichtung wird an zwei Beispielen anhand der Zeichnung, die einen Axialschnitt durch ein Stanzgerät zeigt, weiter erläutert.

1. Über einer Stanzunterlage aus Polyvinychlorid sind vier jeweils 0,1 mm dicke Lagen Schälfolie aus Polytetrafluorethylen fixiert. Eine plattenförmige Schablone mit dicht aneinander angeordneten Bohrungen, die die Stanzstellen fixieren und dazu die Schneiden des Stanzgerätes gerade passieren, erlaubt eine hohe Ausnutzung der Folie. Über der Schablone ist ein Stanzgerät mit einem Schneidenabstand 4 von 0,6 mm an der Schneidenfront angebracht. Der Außendruchmesser der Innenschneide 2 beträgt an der Schneidenfront 6 mm, erweitert sich bis zu einer Tiefe von 10 mm hinter der Schneidenfront auf 15 mm und bleibt dann weitere 30 mm tief konstant. Der Innendurchmesser der Außenschneide 1 beträgt an der Front 7,2 mm.
Beim Stanzen nimmt die Kammer 3 etwa 200 auf das Endmaß gereckte Ringe und weitere 70 nicht vollständig gereckte Ringe auf. Zum Entleeren der Kammer ist die Außenschneide 1 von der Innenschneide 2 in der Richtung vom Chassis 5 abzuziehen. Die 200 gereckten Ringe sind danach aus der Nut der Außenschneide zu entnehmen. Nach vollständigem Ausstanzen der Folie ist durch Vergrößern der Kaliber vom Stanzgerät und der Schablone ein weiteres Bestanzen möglich. Auf die beschriebene Weise werden z.B. 5000 Dichtringe in einer Stunde manuell produziert.

2. Gegeben sei eine Anordnung wie im Beispiel 1.
Die Erfindung ist auch dann anwendbar, wenn sich der Außendurchmesser von 6 mm der Innenschneide 2 von ihrer Front her nicht erweitert. Die Dichtringe haben dann einen sehr großen bzw. stumpfen Kegelwinkel und sehen eher Flachdichtungen ähnlich. Günstig ist es hierbei, die Schneidenfront einer der Schneiden, vorzugsweise der Außenschneide 1, etwas über die Front der Innenschneide 2 überstehen zu lassen, weil sich dadurch der Kegelwinkel verkleinert. Ein gleicher Effekt wird erzielt, wenn durch eine schräge Anphasung an der Schneidenfront der Außenschneide die zunächst flachen Ringe einen etwas größeren Außendurchmesser haben als die Kammer hinter der Schneidenfront. Die Ringe geraten dabei während der Umformung von Flachringen zu stumpfen Kegelringen in eine Vorzugsrichtung, die das Abziehen der Außenschneide von der Innenschneide erleichtert. Die Endformung der beschreibungsgemäß hergestellten Dichtringe kann mit geeigneten Mitteln unabhängig, nach dem Stanzvorgang erfolgen.

Der stumpfe Mikroring von kegelzylindrischer Form, hergestellt nach Beispiel 2 (oder auch Beispiel 1) wird über den Kegelkern einer Glasverbindung z.B. Normschliff NS 7 gestreift und durch Anpressen der Glaskegelhülse in die spitzkegelige Form gebracht. Die mit der erfindungsgemäßen

Vorrichtung hergestellten Mikroformringe bewirken bei ihrer Anwendung als Dichtmanschetten sehr niedrige Leckraten von meist unter $10^{-7}$ Pa $m^3$ $s^{-1}$.

### Ansprüche

1. Zwischen Kern und Hülse eines Behälters einfügbarer Dichtring zur Abdichtung des Behälterinnenraumes gegen inneren oder äußeren Überdruck, wobei Kern und Hülse eine glatte oder geschlossene, jeweils kegelförmige Oberfläche aufweisen und der Kern in die Hülse unter Bildung eines Dichtspaltes einsetzbar ist, dadurch gekennzeichnet, daß der Dichtring ein der Oberfläche des Kerns angepaßter Folienzylinderring aus einem Thermoplast, Elastomer oder Metall ist, wobei das Verhältnis von Mantelbreite zu Mantelstärke größer als Eins ist mit einer Mantelbreite zwischen 0,2 und 2 mm für Thermoplaste, bis 6 mm für Elastomere und bis 0,5 mm für Metalle bei einer Mantelstärke von 0,01 bis 1 mm.

2. Dichtring nach Anspruch 1, dadurch gekennzeichnet, daß der Folienzylinderring umfangsbezogen gereckt bzw. elastisch gedehnt ist.

3. Dichtring nach Anspruch 1 oder 2, dadurch gekennzeichnet, daß der Folienzylinderring vorzugsweise ein Ring aus elastomerem Polymerisat von fluorhaltigen Monomeren, wie vernetzte Copolymerisate von Tetrafluoriden und Perfluormethylvinylether oder thermoplastische Polymerisate von fluorhaltigen Monomeren, wie gesintertes Polytetrafluorethen oder Polytrifluorchlorethen-Copolymerisat oder Ethen-Trifluorchlorethen-Copolymerisat oder Ethen-Tetrafluorethen-Copolymerisat oder Perfluoralkoxypolymer der Strukturformel

$$\left( - CF_2 - CF_2 - \begin{array}{l} CF \\ \, | \\ O - C_nF_{2n-1} \end{array} - CF_2 - \right)_m$$

mit n = 2 bis n = 10, oder aus Mischungen dieser Thermoplaste mit gegebenenfalls bis zu 25 Vol.-% reiner oder gemischter anorganischer Füllstoffe, wie Glas oder Graphit oder Molybdänsulfid ist.

4. Dichtring nach Anspruch 1 oder 2, dadurch gekennzeichnet, daß der Folienzylinderring vorzugsweise ein Ring aus elastomerem Polymerisat von fluorhaltigen Monomeren, wie vernetzte Copolymerisate von Tetrafluoriden und Perfluormethylvinylether oder thermoplastische Polymerisate von fluorhaltigen Monomeren, wie gesintertes Polytetrafluorethen oder Polytrifluorchlorethen-Copolymerisat oder Ethen-Trifluorchlorethen-Copolymerisat oder Ethen-Tetrafluorethen-Copolymerisat oder Perfluoralkoxypolymer der Strukturformel

$$- (CF_2 - CF_2)_m - \left( \begin{array}{l} CF - CF_2 \\ \, | \\ O - C_nF_{2n+1} \end{array} \right)_k -$$

mit n = 2 bis n = 10 und m:k von etwa 10:1 bis etwa 40:1, vorzugsweise etwa 19:1, oder aus Mischungen dieser Thermoplaste mit gegebenenfalls bis zu 25 Vol.-% reiner oder gemischter anorganischer Füllstoffe, wie Glas oder Graphit oder Molybdänsulfid ist.

5. Dichtring nach einem der Ansprüche 1 bis 4, dadurch gekennzeichnet, daß der Folien zylinderring aus gesintertem Polyte trafluorethen im gegebenenfalls modifizierten Zustand, z.B. kurzzeitig über den Kristallitschmelzpunkt auf max. 670 K erhitzt und unter diesen abgeschreckt und/oder bestrahlt mittels Gamma- oder Elektronenstrahlung bei Anwesenheit von Luft und 270 bis 370 K bis zum Absinken der Rißdehnung auf 20 bis 50% ihres Wertes vor der Bestrahlung und/oder Quellung mit 0,1 bis 1 Ma.-% Perfluoralkane und/oder Perfluoralkene und/oder Perfluoralkane im Molmassenbereich von 700 bis 2000 g/mol vorliegt.

6. Dichtring nach einem der Ansprüche 1 bis 5, dadurch gekennzeichnet, daß der Folienzylinderring aus gesintertem Polytetrafluorethen vorzugsweise mit Mantelbreiten von 0,2 bis 0,5 mm und/oder 0,5 bis 1 mm und/oder 1 bis 2 mm und Mantelstärken von 0,03 bis 0,1 mm und/oder 0,1 bis 0,3 mm ausgeführt ist.

7. Verfahren zur Herstellung eines Dichtrings nach einem der vorstehenden Ansprüche, dadurch gekennzeichnet, daß eine ungesinterte Polytetrafluorethylen-Folie mit Gleitmittel isotrop auf 0,1 mm Stärke kalandriert wird, das Gleitmittel durch Behandlung mit Lösungsmittel und/oder Anwendung von Vakuum und/oder erhöhter Temperatur entfernt wird, planare Ringe von einer Breite kleiner 1 mm vor oder nach einer thermischen Oberflächenbehandlung der Folie, die darin besteht, daß die Folie über den Schmelzpunkt erhitzt und sehr schnell abgeschreckt wird, aus der Folie ausgestanzt und zu zylindrischen Ringen verformt werden.

8. Verfahren nach Anspruch 7, dadurch gekennzeichnet, daß zur Entfernung des Gleitmittels als Lösungsmittel vorzugsweise Trichlorethan und Temperaturen zwischen 400 und 500 K angewendet werden.

9. Verfahren nach Anspruch 7 oder 8, dadurch gekennzeichnet, daß die thermische Oberflächenbehandlung vorzugsweise in einem isolierten senkrecht stehenden Rohr vorgenommen wird, wo die Verbrennungsgase einer Wasserstoffflamme aufsteigen und die Folienringe die heiße Gaszone frei schwebend von oben nach unten durchqueren.

10. Verfahren nach einem der Ansprüche 7 bis 9, dadurch gekennzeichnet, daß als Kühlmittel zum Abschrecken vorzugsweise flüssiger Stickstoff verwendet wird.

11. Verwendung eines Dichtringes nach einem der Ansprüche 1 bis 6 in einem Preßdichtverschluß des Behälters, wobei der Dichtring auf die kegelförmige Oberfläche des Kegels aufgezogen ist.

12. Vorrichtung zur Herstellung eines Dichtringes nach einem der An sprüche 1 bis 6, vorzugsweise zur Durchführung des Verfahrens nach einem der Ansprüche 7 - 10, dadurch gekennzeichnet, daß auf eine plastische Unterlage eine plattenförmige Schablone mit ringförmigen Öffnungen aufgebracht ist und daß über der Unterlage ein Stanzgerät mit einer Kammer (3) zwischen zwei konzentrischen Ringschneiden (1, 2) angeordnet ist, wobei sich der Außendurchmesser der Innenschneide (2) von der Schneidenfront her erweitert und der Abstand (4) der Schneidenfronten 0,2 mm bis 5 mm beträgt.

13. Vorrichtung nach Anspruch 12, dadurch gekennzeichnet, daß der Abstand (4) der Schneidenfronten beider Schneiden (1) und (2) vorzugsweise 0,4 mm bis 1 mm beträgt.

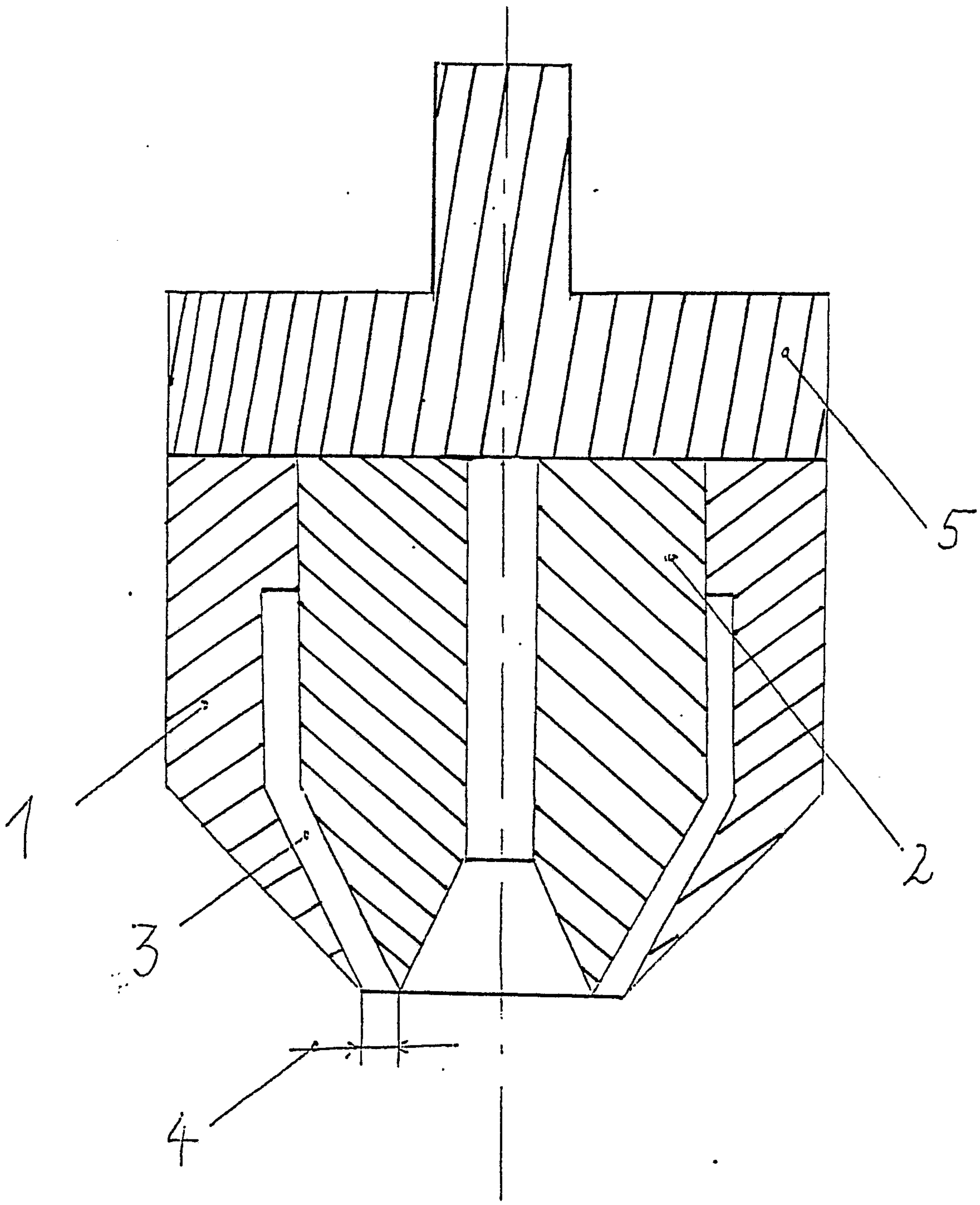
5
2
1
3
4